(19) Europäisches Patentamt

**European Patent Office**

**Office européen des brevets**

(11) Veröffentlichungsnummer : **0 058 300
B1**

(12) **EUROPÄISCHE PATENTSCHRIFT**

(45) Veröffentlichungstag der Patentschrift :
09.01.85

(21) Anmeldenummer : **82100299.5**

(22) Anmeldetag : **16.01.82**

(51) Int. Cl.⁴ : **C 09 J   3/00, C 09 J   5/00**

(54) **System zum Verkleben von gummiertem Gewebe.**

(30) Priorität : **13.02.81 DE 3105249**

(43) Veröffentlichungstag der Anmeldung :
**25.08.82 Patentblatt 82/34**

(45) Bekanntmachung des Hinweises auf die Patenterteilung : **09.01.85 Patentblatt 85/02**

(84) Benannte Vertragsstaaten :
**AT DE FR GB**

(56) Entgegenhaltungen :
**DE-A- 1 694 079**
**GB-A-   574 366**
**ADHASION, Band 24, Nr. 3, Marz 1980, Selten 64-70,
Munchen, DE. M. LANDAU et al.: "Polychloropren-
klebstoffe"**
**Die Akte enthält technische Angaben, die nach dem
Eingang der Anmeldung eingereicht wurden und die
nicht in dieser Patentschrift enthalten sind.**

(73) Patentinhaber : **METZELER KAUTSCHUK GMBH
Gneisenaustrasse 15
D-8000 München 50 (DE)**

(72) Erfinder : **Blahak, Johannes, Dr.
Gautinger Strasse 3
D-8035 Gauting-Buchendorf (DE)**
Erfinder : **Ghibu, Michael, Dr.
Allingerstrasse 111
D-8031 Puchheim (DE)**
Erfinder : **Raubach, Manfred
Estinger Strasse 41
D-8037 Olching (DE)**

(74) Vertreter : **Michelis, Theodor, Dipl.-Ing.
Gneisenaustrasse 15
D-8000 München 50 (DE)**

EP 0 058 300 B1

**0 058 300**

**Beschreibung**

Die Erfindung betrifft ein System zum Verkleben von gummiertem Gewebe, bei dem eine Schicht aus einem Polychloropren-Kleber auf die zu klebende Fläche aufgebracht ist.

Obwohl solche Klebsysteme auf der Basis von Polychloropren in vielen Anwendungsfällen zufriedenstellende Ergebnisse liefern, treten beim Verkleben von gummierten Geweben insofern Schwierigkeiten auf, als das Haftvermögen zu gering ist und auch die Temperatur- und Alterungsbeständigkeit zu wünschen übrig läßt. Als Beispiele sollen die Verklebungen von Polyestergewebe, das mit Ethylenvinylacetat (EVA) beschichtet ist, wie es beispielsweise für die Herstellung von Schlauchbooten verwendet wird, aber auch die Verklebung von anderen Ausführungsformen von gummierten Geweben genannt werden.

Der Erfindung liegt deshalb die Aufgabe zugrunde, ein System zum Kleben von gummierten Geweben der angegebenen Gattung zu schaffen, das ein besseres Haftvermögen bei gleichzeitiger erhöhter Alterungs- und Temperaturbeständigkeit hat.

Diese Aufgabe wird erfindungsgemäß dadurch gelöst, daß auf die Schicht aus dem Polychloropren-Kleber eine zusätzliche, reaktionsfähige Schicht aus einem Polyether-TDI-Prepolymer oder einem Prepolymer aus einem Polypropylendiolgemisch des mittleren Molekulargewichtes 4 000 und 4,4'-Diphenylmethandiisocyanat mit endständigen NCO-Gruppen und einem Vernetzer auf der Basis von aromatischen Diaminen aufgebracht ist.

Zweckmäßige Ausführungsformen sind in den Unteransprüchen zusammengestellt.

Dieses Klebsystem liefert auch bei erhöhten Temperaturen, beispielsweise bei 70 °C, eine Haftkraft, die ein Vielfaches der Haftkraft darstellt, die allein mit dem Klebsystem auf der Basis von Polychloropren erreicht wird. So war die Verklebung mit dem erfindungsgemäßen Klebsystem bei einer Temperatur von 70 °C noch nach mehr als 6 Stunden beständig, während bei dem bekannten Klebsystem auf der Basis von Chloropren bereits nach 5 Minuten Probleme auftraten.

Besonders günstige Ergebnisse werden erhalten, wenn als aromatisches Diamin 3,5-Diethyl-3',5'diisopropyl-4,4'-diaminodiphenylmethan verwendet wird.

Aus dem Artikel « Polychloropren-Klebstoffe », veröffentlicht in Adhäsion, 24. Jahrgang, Nr. 3, März 1980, S. 64 ff ist es bekannt (siehe die mittlere Spalte von Seite 68), die Weichmacher- und Wärmebeständigkeit von Polychloropren-Klebstoffen durch Zusatz von Polyisocyanaten zu verbessern, die bei Raumtemperatur mit dem Klebstoff reagieren. Die Zusatzmenge beträgt zwischen 5 und 10 %.

Außerdem ist es auch bereits bekannt, Klebstoffe auf der Basis von Polyether-TDI-Prepolymeren mit endständigen NCO-Gruppen und üblichen Polyaminen zur Endvernetzung zu verwenden (DE-A 1 694 079).

Die Erfindung wird im folgenden anhand von mehreren Versuchen sowie Vergleichsbeispielen näher erläutert.

Beispiel 1

Zwei Streifen von 5 cm Breite eines mit Ethylenvinylacetat (EVAC) beschichteten Polyestergewebes wurden mit Methylethylketon abgewischt und auf einer Fläche von 30 cm² mit dem in Handel erhältlichen Tivodur 8233® bestrichen, dem 5 Gew.% des zugehörigen Vernetzers B zugesetzt wurden. Bei diesem Vernetzer handelt es sich um Tris-4-isocyanato-thiophosphorsäurephenylester in einer 20 %-igen Lösung von Essigsäureethylester.

Anschließend konnte das Lösungsmittel für etwa 15 Minuten aus der aufgebrachten Schicht ablüften. Dann wurde die Fläche einseitig mit einem Polyether-TDI-Prepolymer mit endständigen NCO-Gruppen und einem Molekulargewicht von etwa 1 750 bestrichen. Als Vernetzer enthielt dieses Prepolymer 3,5-Diethyl-3',5'-diisopropyl-4',4'-diamino-diphenylmethan.

Auf die so bestrichene Fläche wurde eine entsprechende, jedoch nicht mit dem Klebsystem bestrichene Fläche aus beschichtetem Polyestergewebe aufgelegt und kurz mit einer Rolle angepreßt. Anschließend wurden die beiden Flächen 30 Minuten lang bei 120 °C ausgeheizt und damit das Klebsystem ausreagiert.

Die Prüfung der Beständigkeit der Verklebung erfolgt nach DIN 7870. Es ergaben sich folgende Werte :

| Zugkraft [N] | Zeit [h] | Temperatur [°C] |
|---|---|---|
| 450 | > 6 | 70 °C |

Beispiel 2

Das Beispiel 1 wurde mit dem Unterschied wiederholt, daß die Ausheizzeit bei 120 °C 4 Stunden betrug. Die Prüfung der Beständigkeit der Verklebung brachte folgende Ergebnisse :

| Zugkraft [N] | Zeit [h] | Temperatur [°C] |
|---|---|---|
| 600 | > 6 | 70 °C |

2

## Beispiel 3

Die Verklebung von zwei nach Beispiel 1 miteinander verklebten Flächen wurde in einer Reißmaschine getestet. Bei einer Reißkraft von 2 000 N riß das beschichtete Gewebe, nicht jedoch die Verklebung.

## Vergleichsbeispiel

Das Klebsystem nach Beispiel 1 wurde nachgestellt, jedoch ohne Zusatz des Polyether-TDI-Prepolymers und des zugehörigen Vernetzers. Die Prüfung der Beständigkeit der Verklebung erbrachte folgende Werte :

| Zugkraft [N] | Zeit | Temperatur [°C] |
|---|---|---|
| 450 | 5 Min. | 70 °C |
| 600 | 4 Min. | 70 °C |

## Beispiel 5

Ein vernetzter Elastomer auf der Basis von Buthylkautschuk wurde mit dem Klebstoff auf Basis Polychloropren bestrichen, der unter der Bezeichnung « Chemosil 602 » von der Firma Henkel erhältlich ist. Die bestrichene Fläche hat eine Größe von 30 cm². Anschließend wurde ein aminovernetzer Polyurethan-Elastomerfilm aufgetragen. Dieser bestand aus einem reagierenden Prepolymer, aus einem Polypropylendiolgemisch des mittleren Molekulargewichts 4 000 und 4,4'-Diphenylmethan-diisocyanat. Als Vernetzer wurde wieder 3,5-Diethyl-3',5'-diisopropyl-4,4' diamino-diphenylmethan zugesetzt.

Nach dem Anrollen einer entsprechenden, unbeschichteten Fläche aus einem Buthylgummi wurde die Verklebung 30 Minuten lang bei 80 °C nachgeheizt. Im Schälversuch wurde eine Trennkraft von 30 N/2 cm erhalten.

## Vergleichsbeispiel

Eine Verklebung gemäß Beispiel 5, jedoch ohne das Polyurethan-Elastomer-System, wurde auf die erläuterte Weise hergestellt. Die Trennkraft betrug im Schälversuch nur 3 N/2 cm.

## Ansprüche

1. System für die Verklebung von gummiertem Gewebe, bei dem eine Schicht aus einem Polychloropren-Kleber auf die zu klebende Fläche aufgebracht ist, dadurch gekennzeichnet, daß auf die Schicht aus dem Polychloropren-Kleber eine zusätzliche, reaktionsfähige Schicht aus einem Polyether-TDI-Prepolymer oder einem Prepolymer aus einem Polypropylendiolgemisch des mittleren Molekulargewichtes 4 000 und 4,4'-Diphenylmethandiisocyanat mit endständigen NCO-Gruppen und einem Vernetzer auf der Basis von aromatischen Diaminen aufgebracht ist.

2. System nach Anspruch 1, dadurch gekennzeichnet, daß ein Prepolymer mit einem mittleren Molekulargewicht zwischen 1 500 und 5 000 verwendet wird.

3. System nach einem der Ansprüche 1 oder 2, dadurch gekennzeichnet, daß ein aromatisches Diamin mit maximal zwei Benzolringen verwendet wird.

4. System nach einem der Ansprüche 1 bis 3, dadurch gekennzeichnet, daß als aromatisches Diamin 3,5-Diethyl-3',5' diisopropyl-4,4'-diamino-diphenylmethan verwendet wird.

## Claims

1. System for bonding rubber-coated fabric in which a layer of a polychloroprene adhesive is applied to the surface to be adhered, characterised in that an additional reactive layer of a polyether-TDI-prepolymer or a prepolymer of a polypropylene diol mixture having an average molecular weight of 4,000 and 4,4'-diphenyl methane diisocyanate having terminal NCO-groups and a cross-linking agent based on aromatic diamines is additionally applied to the layer of the polychloroprene adhesive.

2. System according to claim 1, characterised in that a prepolymer having an average molecular weight from 1,500 to 5,000 is used.

3. System according to one of claims 1 or 2, characterised in that an aromatic diamine having at most two benzene rings is used.

4. System according to one of claims 1 to 3, characterised in that 3,5-diethyl-3',5'-diisopropyl-4,4'-diamino-diphenyl methane is used as aromatic diamine.

## Revendications

1. Système pour coller du tissu caoutchouté dans lequel une couche d'un adhésif au polychloro-

3

prène est déposée sur les surfaces à coller, caractérisé en ce que, sur la couche en adhésif de polychloroprène, est déposée une couche supplémentaire, apte à réagir, en un prépolymère de polyéther et de diisocyanate de toluène, ou en un prépolymère constitué d'un mélange de polypropylènediol, de masse moléculaire moyenne égale à 4 000, et de 4,4'-diisocyanate de diphénylméthane ayant des groupes terminaux NCO et d'un agent réticulant à base de diamines aromatiques.

2. Système suivant la revendication 1, caractérisé en ce qu'un prépolymère ayant une masse moléculaire moyenne comprise entre 1 500 et 5 000 est utilisé.

3. Système suivant l'une des revendications 1 ou 2, caractérisé en ce qu'une diamine aromatique, ayant au maximum deux cycles benzéniques, est utilisée.

4. Système suivant l'une des revendications 1 à 3, caractérisé en ce que le 3,5-diéthyl-3',5'-diisopropyl-4,4'-diamino-diphénylméthane est utilisé comme diamine aromatique.